(19) **Europäisches Patentamt**
**European Patent Office**
**Office européen des brevets**

(11) **EP 1 802 404 B1**

(12) **EUROPEAN PATENT SPECIFICATION**

(45) Date of publication and mention
of the grant of the patent:
**15.05.2013 Bulletin 2013/20**

(51) Int Cl.:
*B08B 1/02* (2006.01)     *B08B 5/02* (2006.01)
*B08B 15/04* (2006.01)    *B41F 23/00* (2006.01)

(21) Application number: **05803556.9**

(22) Date of filing: **21.10.2005**

(86) International application number:
**PCT/GB2005/004075**

(87) International publication number:
**WO 2006/043084 (27.04.2006 Gazette 2006/17)**

(54) **WEB CLEANER METHOD**

VERFAHREN ZUR BAHNREINIGUNG

PROCEDE DE NETTOYAGE DE BANDE

(84) Designated Contracting States:
**AT BE BG CH CY CZ DE DK EE ES FI FR GR HU
IE IS IT LI LT LU LV MC NL PL PT RO SE SI SK TR**

(30) Priority: **22.10.2004 GB 0423467**

(43) Date of publication of application:
**04.07.2007 Bulletin 2007/27**

(73) Proprietor: **Predictive Maintenance Company
Limited
Bingley BD16 3HE (GB)**

(72) Inventor: **BENNETT, Leslie
27 Lyndale Road,
Bingley BD16 3HE (GB)**

(74) Representative: **Sanderson, Nigel Paul et al
Harrison Goddard Foote
Saviour House
9 St Saviourgate
York, YO1 8NQ (GB)**

(56) References cited:
**EP-A- 0 491 334      DE-A1- 19 949 753
GB-A- 1 137 418      US-A- 5 980 646
US-A1- 2002 108 203   US-A1- 2003 046 787
US-B1- 6 178 589**

## Description

The present invention relates to methods for cleaning moving webs of material, and in particular for cleaning webs of printable material, in particular paper, prior to printing in a printing press such as a lithographic, flexographic or gravure printing press or the like. The requirement for cleaning webs of printing substrate (paper) are well known in the art. The surface of the paper may carry dust and dirt particles, lint, loose paper fibres and loose paper coating particles which can all be transferred to the printing apparatus itself where they accumulate and degrade the quality of the resultant printing. This necessitates cleaning of the printing apparatus on a frequent basis which is time consuming and expensive. The cleaning process itself for printing plates, blankets and associated components can shorten their useful life.

Various methods of cleaning the web of printable material have been used in the prior art. One example of a successful web cleaning device is described in US 6 598 261. Figure 1 shows a perspective view of a typical apparatus as described in US 6 598 261 and Figure 2 shows a cross section through the apparatus. Referring to Figures 1 and 2 it can be seen that a web of paper 500 passes through the cleaning apparatus 502. The web 500 is driven by a conventional drive roller arrangement (not shown) along a path which may include one or more idler rolls 501. The direction of movement of the web through the apparatus 502 is indicated by arrows 500A.

The rollers 504 most preferably have a soft outer surface, usually comprising a fabric-tufted buffing material. The rollers 504 are disposed in a fixed location on either side of web 500 and rotate in a direction opposite to the direction of movement 500A of the web 500. That is, the tangential direction of any point on the surface of each roller 504 when closest to the web is opposed to the direction of movement 500A of the web 500. The direction of rotation of the rollers 504 is indicated by arrows 504A, 504B.

Each roller 504 is surrounded by a housing 506 which is connected by means of ducts 508 to a vacuum source (not shown). Mounted within the housing 506 is an "air separating bar" 510 the leading edge 510E of which is disposed adjacent the roller 504. An air flow path is defined from the general region of the moving web 500 and the rollers 504 through a region 512 between the air separating bar and a wall of the housing 506, into a chamber 514 and out through an outlet 516 located at the side of the chamber 514.

US 6 598 261 states that the rollers 504 are mounted "in close proximity" to the web 500. This is interpreted as meaning that the rollers 504 are close to, but do not touch, the web 500. A spacing of 0.001 inch (0.0254mm) to 0.01 inch (0.254mm) between the respective rollers 504 and the web 500 is suggested. US 6 598 261 also suggests that the peripheral speed of each roller 504 is at least 20% greater than the surface speed of the web 500 and also the each roller 504 has a peripheral speed at least double the speed of the moving web 500.

The present invention seeks to provide an improved web cleaner and, more specifically, an improved web cleaner generally of the type described in US 6 598 261.

According to the invention there is provided a method of cleaning a moving web comprising:

> providing an apparatus comprising
> a pair of rotating cleaning rollers disposed on opposite sides of the web;
> a housing surrounding a major part of the surface of each roller;
> a vacuum chamber substantially co-extensive with each roller and connected to a vacuum source;
> a longitudinal slot extending parallel to each roller and substantially co-extensive therewith, the slot having an inlet proximate the roller surface and an outlet in communication with the vacuum chamber and operatively providing an air flow path from adjacent the roller into the vacuum chamber, characterised
> in that the method comprises operating the rollers and the vacuum source such that the air flow speed of air entering each inlet is not less than the surface speed of the rollers.

Preferably the air flow speed at each inlet is at least 1% greater than the surface speed of the rollers, more preferably at least 10% greater than the surface speed of the rollers and especially at least 50% greater than the surface speed of the rollers.

In particularly preferred embodiments, the rollers rotate in a direction opposite to the direction of movement of the web.

Most preferably the slot is arranged on the upstream side of the roller with respect to the direction of movement of the web.

Preferably in this embodiment the differential between the surface speed of each roller and the speed of the web is from about 5ms$^{-1}$ to about 30ms$^{-1}$, more preferably from about 6ms$^{-1}$ to about 12ms$^{-1}$ and especially about 10ms$^{-1}$.

Preferably the rotational speed of the rollers is from about 50 to 100 revs$^{-1}$.

For a better understanding of the invention and to show how the same may be carried into effect, reference will be made by way of example only to the following drawings, in which:

> Figure 1 is a perspective view of a prior art web cleaning apparatus according to US 6 598 261;
> Figure 2 is a cross section through the prior art apparatus of Figure 1;
> Figures 3A and 3B are views of a vacuum chamber of a first modified shape for an apparatus as disclosed herein;
> Figure 4 is a side view of a vacuum chamber of an alternative shape for an apparatus as disclosed herein;

Figure 5 is a schematic end view of an apparatus having a vacuum chamber similar to that of Figures 3A and 3B;

Figure 6 is a schematic section through a part of an apparatus as disclosed herein including a vacuum chamber similar to that of Figures 3A and 3B;

Figure 7 is a representation of a web cleaning system employing a plurality of web cleaners attached to a single vacuum source;

Figure 8 is a representation of a valve for use with the web cleaner as disclosed herein

Figure 9 is a representation of the arrangement of valves and vacuum lines for a single web cleaner as disclosed herein as disclosed herein; and

Figure 10 is a schematic section through a part of an apparatus as disclosed herein showing a closeable flap for use in a cleaning step.

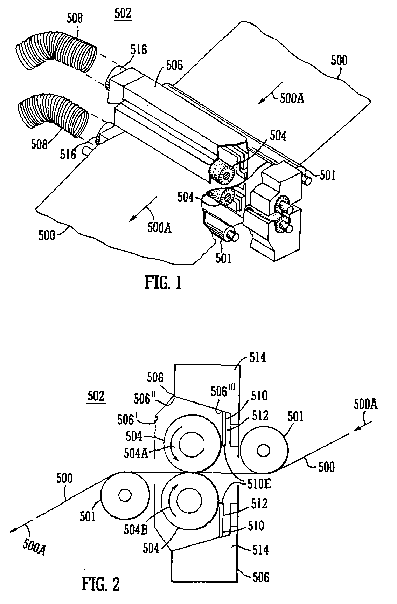

Referring now in particular to Figures 1 to 4, the prior art apparatus 502 of Figures 1 and 2 has a vacuum chamber housing 506 of uniform shape with respect to the whole length of the roller 504. In other words, the lateral cross-section (with respect to the axis of rotation of the roller 504) has the same shape at whichever point the cross-section is taken. The outlet 516, to which the vacuum pump is connected via ducts 508, is arranged at the end of chamber 514 defined in housing 506. The inventor has appreciated that this has the important consequence of providing a non-uniform pressure with respect to the axial length of the roller 504. That is, the pressure is least (degree of vacuum is greatest) at the end of the chamber 514 nearest the outlet 516. Thus, the vacuum applied must be relatively greater so that the actual vacuum achieved at the end of the roller 504 distant from the outlet 516 is sufficient (which carries the danger that the degree of vacuum at the end of the roller 504 nearest the outlet 516 is too great), or the vacuum at the end of the roller 504 distant from the outlet 516 is insufficient, which compromises the cleaning efficiency of the apparatus. The inventor has further appreciated that in the prior art apparatus where the degree of vacuum is insufficient the speed of the air moving through the housing 506 is consequently insufficient, which results in deposition of particles carried in the air stream.

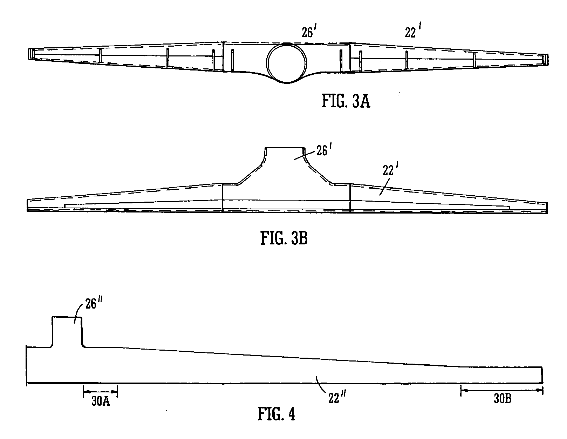

To alleviate this problem, as illustrated in Figures 3A, 3B, 4, 5 and 6 the housing is shaped to define a vacuum chamber the cross-sectional area of which reduces in a direction away from the outlet.

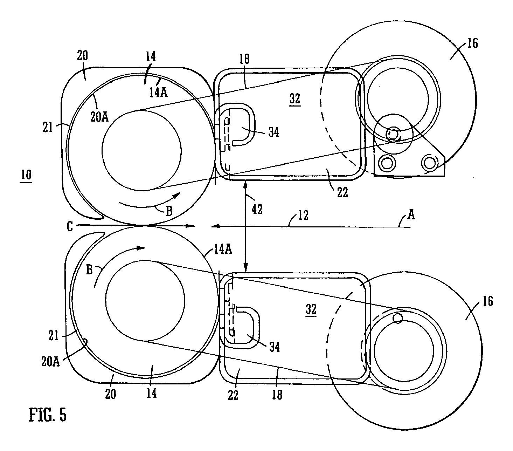

Figure 5 shows a web cleaning apparatus 10. The passage of the web 12 through the apparatus is indicated by line and arrow A. The apparatus 10 includes a pair of cleaning rollers 14 which rotate in the direction shown by arrows B. That is, the direction of movement of any point on the surface of the rollers 14 when closest to the web 12 is opposite to the direction of movement of the web 12. The rollers 14 are driven by any suitable drive means which in the illustrated example is a motor 16 and belt 18 drive arrangement. The majority of the perimeter of each roller 14 is surrounded by a housing 20. A vacuum chamber 22 is disposed immediately adjacent each cleaning roller 14 and adjacent a side of housing 20. The vacuum chamber 22 includes an inlet slot 24 or like orifice which is approximately co-extensive with the length of the roller 14. The vacuum chamber 22 extends parallel to the roller 14. Ideally, as much of the surface of the roller 14 as possible is surrounded by the housing 21. In practice it is preferred that the housing covers the roller 14 in an arc from the web 12 to the inlet slot 24 of at least 180° to about 270°. The inlet slot 24 is preferably disposed as far away from the web 12 as practicable, so that the air flow through the slot does not disturb the passage of the web. A gap 21, which is preferably of constant dimension is defined between the housing 20 and the cleaning roller 14. Preferably the gap 21 is made as small as possible, that is, a clearance gap. In this way, the possibility of carrying particles removed from the web, entrained in the roller or in the air around the roller, into the gap 21 between the roller and the housing is minimised. The rollers 14 are arranged in close proximity to the web 12, but in the most preferred embodiments of the invention, the rollers 14 do not touch the web 12.

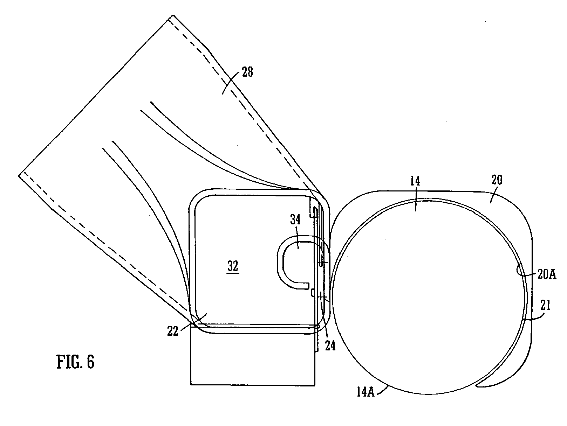

The vacuum chamber 22 is of non-uniform shape. Typical shapes of vacuum chamber 22 are illustrated in Figures 3A, 3B and 4 in which the vacuum chamber is identified as 22' (Figures 3A and 3B) or 22" (Fig 4). In each case, the vacuum chamber 22, 22', 22" includes an outlet 26', 26" which is connected (via suitable ducting 28) to a vacuum pump (not shown). A flow of air is thus created through the vacuum chamber 22, 22', 22". The vacuum chamber 22, 22', 22" is in each case shaped such that the cross-sectional area of the chamber generally decreases in the direction away from the outlet 26', 26". Figures 5 and 6 show the cross-sectional area of the vacuum chamber 22 decreasing from a maximum in region 32 to a minimum in region 34. As can be seen in particular from Figure 4, it is not necessary for the cross-sectional area to decrease along the whole length of the chamber 22, 22', 22". Figure 4 shows regions 30A and 30B wherein the cross-sectional area of the chamber 22" is substantially constant. The objective in providing the vacuum chamber 22, 22', 22" with a decreasing cross-sectional area in the direction away from the outlet 26', 26" is to achieve a substantially uniform pressure along the whole length of the inlet 24. A substantially uniform air speed at any point of the slot 24 is thereby achieved. The cleaning efficiency of the web cleaner 10 is not compromised by having a portion of the inlet slot 24 experiencing an excessively high or excessively low pressure, since the pressure does not significantly vary between any two regions of the inlet slot 24. The vacuum chamber 22 is also shaped to provide a relatively turbulent air flow within the chamber 22, to minimise the deposition of particulate debris on the internal walls of the chamber. In contrast, the air flow in the slot 24 should be as smooth as possible, to maximise the air speed in the slot. The slot 24 should be made as long as reasonably possible (with respect to the dimension from its inlet to its outlet). As noted above, the air in the vacuum chamber 22 is preferably turbulent. Thus, by maximizing the length of the slot 24, the effect of that turbulence within and beyond the slot 24 is minimised. In other words, a longer slot 24 minimises any turbulence at the inlet end.

With the above objective in mind, the particular construction of the vacuum chamber including its size, the maximum cross-sectional area, the minimum cross-sectional area, the rate of change between said maximum and minimum, and any sections which have substantially constant area, is a matter for selection by the person skilled in the art. These can be determined by the person skilled in the art in accordance with the pre-selected, pre-determined or required properties of the apparatus such as the size and speed of rotation of the cleaning rollers 14, the speed of movement of the web 12 and the particular characteristics of the vacuum source used, such that the required substantially uniform pressure at the inlet 24 is achieved.

A further advantage, as indicated above, of the apparatus as disclosed herein can be seen from Figures 5 and 6, in that inner face 20a of housing 20 is shaped to be part cylindrical so that it conforms to outer surface 14a of cleaning roller 14 with only a small clearance gap 21 remaining therebetween. Most preferably, gap 21 is sufficient such that the outer surface 14a of roller 14 never contacts the inner surface 20a of the housing 20. Typically gap 21 is of the order of about 0.5mm to about 5mm, preferably about 1mm to about 3mm and most preferably about 2mm. This construction overcomes a serious deficiency of the prior art in which the angular construction of the housing 506 and the relatively large and variable gap 521 (Figure 2) between the cleaning roller 504 and the housing 506 permits significant differences in pressure and air speed to develop around the roller 504. In regions of relatively low air speed or eddy currents, particles removed from the web by the action of the rollers 504 may be deposited on the inner face of the housing 506. Typical such regions are shown in Figure 2 at 506', 506" and 506"'.

Deposition of cleaned particulates within the housing 506 is detrimental to the cleaning efficiency of the apparatus 502. The apparatus 10 as disclosed herein obviates this problem by providing the relatively narrow and uniform gap 21 in which the air flow speed is substantially constant and relatively fast, and by means of which eddy currents and the like are avoided. Thus, deposition of air-borne particulates carried away from the surface of the web 12 is significantly reduced or eliminated.

In the most preferred embodiments of the invention, the rollers 14 are arranged so that they do not contact the web 12. Most preferably, the gap between the rollers 14 and web 12 is as small as possible. In an ideal arrangement, for example, the rollers 14 might initially be set in a position such that the outer surface of the rollers 14 just touches the adjacent surface of the web 12, after which the ideal gap is obtained by running the rollers and the web until the outer surface of the rollers wears to an extent sufficient to provide a gap between the rollers 14 and the web. In any case, the gap between the outer surface of the rollers wears to an extent sufficient to provide a gap between the rollers 14 and the web. In any case, the gap between the outer surface of the rollers 14 and the web 12 is preferably less than 6mm, more preferably less than 3mm and most preferably less than 1mm.

In further preferred arrangements of the invention, the differential between the surface speed of the roller 14 and the speed of the web 12 is at least 5m/s and may be as high as 25-30m/s. Speed differentials in excess of 25-30 m/s may provide the desired cleaning effect in accordance with the invention, but no advantage is achieved with such higher speeds. Preferably, the speed differential is about 6 to 12 m/s, most preferably are about 10 m/s. However, the optimum speed differential also depends on the size of the gap between the surface of the rollers 14 and the web 12. A speed differential of about 5-10 m/s is most appropriate for a gap of 1mm or less. For gaps of the order of 5-6mm, a speed differential of 25-30mls is generally required. As noted above, smaller gaps between the rollers 14 and the web 12 of the order of 1mm or less are preferred. Typically, the rotational speed of the rollers 14, is in the range of from about 50 to 100 rev/sec, more preferably 65 to 70 rev/sec. Of course, the required rotational speed of the rollers 14 is determined by the speed of the web 12 and the required differential speed between the web 12 and the rollers 14. The diameter of the rollers 14 is typically around 120mm. Expressed differently, where the speed of the rollers 14 (expressed as the surface speed) is Z, the speed of the web is Y and the required speed differential is X, then

$$Z = Y + X$$

Thus Z is always great than Y (and in the opposite direction, since the roller rotates in the opposite direction to the direction of the web).

In another preferred embodiment of the invention the vacuum applied to the vacuum chamber 22, 22', 22" and the inlet slot 24 is such that the speed of the air entering the inlet slot 24 is equal to or greater than the surface speed of the roller. Preferably the speed of the air entering the slot is at least 1% greater, more preferably at least 10% greater and especially at least 50% greater than the surface speed of the rollers 14. Bearing in mind that the rotation of the rollers 14 causes movement of the air immediately adjacent the rollers (which movement is exploited in the present invention for the removal of particulate matter from the web 12), if the speed of the air at the inlet slot 24 (arising because of the vacuum in the vacuum chamber 22, 22', 22"), is lower than the speed of the air approaching the vacuum slot as a result of the rotation of rollers 14, then the air in which the particulate matter is entrained will not enter the vacuum slot 24.

In many applications the rollers 14, the housing 20 and the vacuum chamber 22 are so sized that their length (the dimension along the axis of the roller 14) is substantially the same as the width of the web which is to be cleaned. However, this is not necessarily so. For example, the width of the web may be less than the length of the roller 14. Typical widths in this respect may be nominally half or quarter widths with respect to the width of a standard web.

In another particularly preferred feature of the apparatus disclosed herein the vacuum chamber 22, and more especially the inlet slot 24, is provided with a plurality of sensors which are responsive to the speed of the air in the inlet slot 24. Pressure sensors are preferred, but air speed sensors can also be used Suitable pressure sensors are available from suppliers such as Honeywell and. Sensor Technics. The pressure sensors are most preferably substantially evenly spaced along the length of the inlet slot 24. The provision of such sensors has numerous advantages.

Where a web having a width less than the length of the roller 14 (or vacuum chamber 22 is cleaned, the use of the pressure sensors enables information to be gathered relating to the particular zone or region of the vacuum chamber 22 where the web is located. For example, if, as sometimes happens, tension in the web is lost briefly, the web may be sucked towards one or other of the vacuum chambers 22 and held by the vacuum. This will be detected by a pressure sensor local to the web as a local increase in vacuum/decrease in pressure. On detection of the pressure change action can be taken by an operator to correct the fault. Alternatively, the pressure sensors may be connected to a control arrangement of web cleaner which, on detection of a pressure reduction may temporarily release the vacuum (e.g. by shutting off the vacuum source, or opening a valve located between the vacuum chamber 22 and the vacuum source so that the web is released.

Another advantage which results from the provision of pressure sensors occurs with webs of any width. Sometimes during the running of a printing apparatus loose pieces or strips of paper may be formed, for example, when webs are spliced together, typically when a first roll of printing paper expires and is joined (spliced) to a new roll to form a continuous web. These pieces of paper may be sucked into the web cleaner by the vacuum applied to the vacuum chamber 22, potentially causing a blockage of the slot 24 and a consequently loss of vacuum as applied to the web. Clearly in these circumstances the effectiveness of the web cleaner is much reduced. The provision of the pressure sensors enables not only the occurrence of such a blockage to be detected, but also its location. Remedial action can thus be taken rapidly and easily, since an operator will know immediately where to look for the blockage.

Where a plurality of pressure sensors is provided, it is very advantageous to provide the slot 24 with a plurality of lateral walls extending across the width of slot 24. Such walls have the effect of dividing the slot into discrete sections, without significantly hindering the flow of air through the slot. A pressure sensor can then be located in each such section, so that the pressure/vacuum in each section can be independently determined. In a convenient form of the apparatus disclosed, one such discrete section and its associated sensor is provided per conventional web width. A conventional web width may depend on the particular application of the printing press, but a typical example is the width of standard newsprint paper used for printing newspapers. In this respect a single web cleaner such as that disclosed herein can be used to simultaneously dean a number of webs running in parallel, and one sensor is provided per such web. Similarly, the web cleaner may be used with a printing press which prints paper having a width which is say, four conventional web widths. Again, a single web cleaner such as that disclosed herein is used with four discrete sections in the slot and respectively four pressure sensors. Thus, in the case of a problem such as the blockage of a slot, the location of the problem is easily determined.

Another advantageous application of pressure sensors occurs where a single vacuum source is coupled to a plurality of web cleaners. For reasons similar to those outlined above, from time to time the web passing through a given web cleaner may be sucked against the slot 24 of the web cleaner, or the slot of a given web cleaner can become blocked by a piece of paper or the like. A pressure sensor mounted on the particular web cleaner, more particularly mounted in the slot 24, will detect the increase in vacuum (reduction in pressure) in the vacuum chamber where the problem has occurred. Means may then be provided to disconnect the vacuum source from the web cleaner where the problem has occurred, so that the operation of the other web cleaners which depend on the single vacuum source can continue.

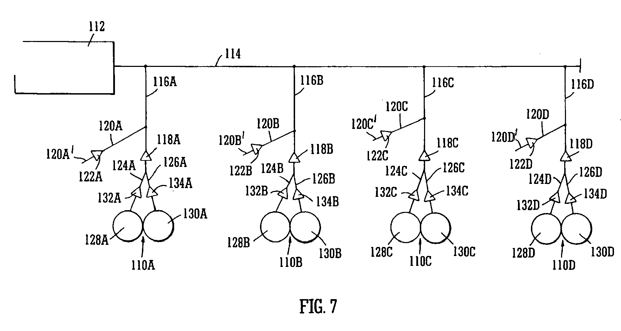

As will be readily understood, where a plurality of web cleaners is connected to a single vacuum source and one of the web cleaners becomes (partially) blocked, action is required to remove the problem. This action is required for two reasons. Firstly, to restore the blocked web cleaner to its fully operational state and secondly because the blockage of one web cleaner will, at least partially, affect the vacuum experienced by the other web cleaners connected to the same vacuum source. In particular, the vacuum experienced by these other web cleaners may increase, which may undesirably reduce their cleaning effectiveness. For these reasons, each web cleaner may be provided with one or more valves to control the air flow from the web cleaner. A typical arrangement is schematically illustrated In Figure 7.

Figure 7 shows schematically a common vacuum source 112 which is linked to a plurality of (in this case, four) web cleaning apparatus 110A, 110B, 110C, 110D by way of a main vacuum line 114 and respective branch vacuum lines 116A, 116B, 116C and 116D. Other arrangements for connecting the web cleaning apparatus 110A - 110D to the vacuum source 112 are possible. Each web cleaning apparatus 110A - 1100 includes respective upper and lower halves, shown schematically as 128A, 130A; 128B, 130B; 128C, 130C and 128D, 130D arranged on respective sides of the web to be cleaned, as described in relation to Figure 4. The respective halves of the web cleaners are connected to vacuum branch lines 116A - 116D by, respectively, vacuum lines 124A- 124D and 126A-126D.

The arrangement of the web cleaning apparatus 110A will be described in more detail, it being understood that some description applies to the other web cleaning apparatus 110B, 110C and 110D, subject to the substitution of the suffix "A" in the reference numbers by the relevant suffix "B", "C" or "D".

Vacuum line 116A is provided with a main valve 118A by means of which the vacuum line 116A can be closed, that is, so that the web cleaning apparatus is no longer subject to any vacuum, as may be required for routine maintenance or to rectify any problem or fault which may occur. As noted above, shutting the valve 118A may have an undesirable effect on the degree of vacuum experienced by the apparatus 110B, 110C and 110D. This could, in principle, be compensated for by adjustment of the vacuum source 112, but such adjustment could be complex and uncertain. The apparatus as disclosed herein provides an alternative in that the apparatus 110A is provided with a bypass line 120A having a valve 122A. The bypass 120A line is open to the atmosphere at its end 120A', optionally via a silencer (not shown). The valve 122A is closed in normal use. However, when the valve 118A is dosed, to shut off the web cleaning apparatus 110A, valve 122A is opened. This provides a flow of air into vacuum line 116A via line 120A which compensates for the flow of air to line 116A which, but for the closure of valve 118A, would have occurred through the apparatus 110A. Thus, opening of the valve 122A compensates for the closure of valve 118A so that the degree of vacuum experienced by the web cleaning apparatus is not adversely affected.

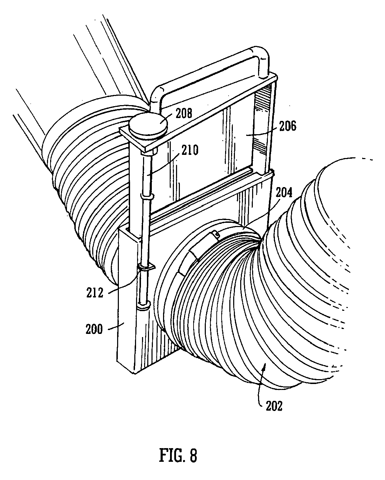

The degree of vacuum experienced by, and hence the flow of air through, each half 128A, 130A of the web cleaning apparatus 110A is controllable by means of respective valves 132A, 134A. The valves 132A, 134A are preferably gate or shutter type valves which are provided with means for fine adjustment of their setting. A typical such valve is shown in Figure 8 in an open condition. The valve 200 (which might be any of the valves 132A - D or 134A - D) is mounted in a vacuum line 202 and includes a housing 204 to which the vacuum line 202 is attached. The housing 204 defines a flow path for the passage of air through the valve 200 when the valve 200 is in a fully or partially open position. The valve 200 further includes a shutter 206 which is slidably mounted in housing 204. The shutter 206 is raised and lowered to open and close the valve. As will be readily apparent, the shutter 206 closes the valve 200 by obstructing the air flow path though the valve. Shutter 206 is provided with an adjustment mechanism 208 which enables an operator to precisely set its location and thus to precisely control the flow of air through the valve 200. In the preferred embodiment as illustrated, the adjustment mechanism comprises a threaded bolt 210 which is held captive on the shutter 206 and which cooperates with an internally threaded bore 212 arranged on the housing 204. Thus, by means of valves 132A - 132D and 134A to 134D, the degree of vacuum experienced by each half of each web cleaning apparatus may be set with great accuracy so that an optimum web cleaning efficiency is achieved.

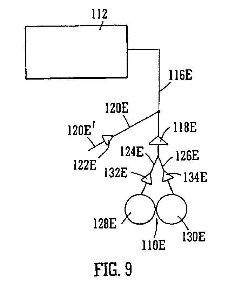

The use of valves 200 is not confined only to the case of multiple web cleaning apparatus having a common vacuum source. Figure 9 illustrates a corresponding arrangement employing only a single web cleaning apparatus 100E. It can be seen that the arrangement is essentially the same as that of apparatus 110A in Figure 8, with corresponding parts having corresponding reference numbers, with the substitution of the suffix "E". The bypass line 120E and bypass valve 122E are in this case optional. However, their provision can be advantageous in avoiding the need to adjust or shut down the vacuum source 112 when the valve 118E is closed. The valves 132E and 134E again function to ensure that a correct degree of vacuum is applied to the respective halves 128E, 130E of the web cleaning apparatus 110E, and in particular to ensure that the respective halves 128E, 130E are in balance, with regard to the applied vacuum, so that the web is not drawn towards one half 128E, 130E in preference to the other half 130E, 128E.

Valves 118A - 118E preferably are also gate or shutter type valves having a construction generally similar to valves 200 (i.e. valves 132A to 132E and 134A to 134E. Optionally, and advantageously, valves 118A - 118E may be operated pneumatically, rather than manually, under the control of an overall control means for the apparatus. Likewise, valves 122A - 122E may be pneumatically controlled, if desired. The valves 122A - 122E are preferably of similar construction to valves 118A -118E.

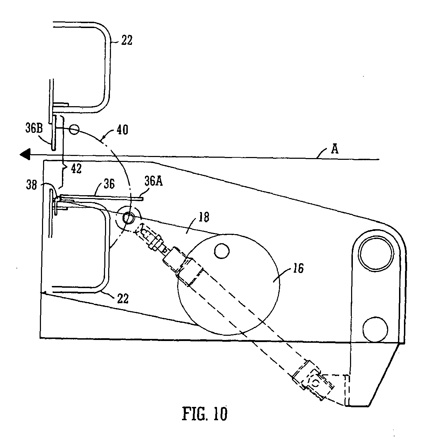

With particular reference to Figure 10, a further advantageous embodiment of the apparatus disclosed herein provides means for cleaning the rollers 14 of any debris which may have become entrained in or on their outer surface. The cleaning of the rollers 14 is implemented when the web cleaner 10 is not in normal operation, that is, in the absence of web 12. In Figure 10, the normal path and direction of the web 12 - were it present - is indicated by arrow A. For cleaning the rollers 14, a hinged flap 36 is provided. The flap is mounted on a hinge 38 so that it can move through an arc 40 from an open position 36A to a closed position 36B (where the flap is shown in part only). In the open position 36A the flap 36 rests in a position which does not obstruct the path of web 12. In the closed position 36B the flap 36 closes the gap 42 between the respective vacuum chambers 22. With the flap 36 in the closed position 36B it is not possible for any significant amount of air to flow towards the housings 20 in the direction indicated by arrow A. Thus, when a vacuum is applied to vacuum chambers 22, air is drawn through slot 24, but the major air path is between and through rollers 14, as indicated by arrow C (Figure 5). Thus, the air, passing between and through the rollers 14 strips the rollers of particulate debris which they may be carrying and the debris thus entrained in the air flow is transferred through the slot 24 to the vacuum chamber 22 and then suitably disposed of via ducting 28. During the cleaning process, the rollers 14 are preferably rotated. The rollers 14 may be rotated in a cleaning cycle which includes periods of fast rotation and slower rotation, and rotation in the forward and reverse directions. Typically the cleaning procedure is carried out about once per week.

**Claims**

1. A method of cleaning a moving web (12) comprising:

   providing an apparatus (10) comprising

   a pair of rotating cleaning rollers (14) disposed on opposite sides of the web (12);
   a housing (20) surrounding a major part of the surface of each roller (14);
   a vacuum chamber (22) substantially co-extensive with each roller (14) and connected to a vacuum source;
   a longitudinal slot (24) extending parallel to each roller (14) and substantially co-extensive therewith, the slot (24) having an inlet proximate the roller (14) surface and an outlet in communication with the vacuum chamber (22) and operatively providing an air flow path from adjacent the roller (14) into the vacuum chamber (22),

   **characterised in that** the method comprises operating the rollers (14) and the vacuum source (22) such that the air flow speed of air entering each inlet is not less than the surface speed of the rollers (14).

2. A method as claimed in claim 1 wherein said air flow speed is at least 1% greater than the surface speed of the rollers (14).

3. A method as claimed in claim 1 wherein said air flow speed is at least 10% greater than the surface speed of the rollers (14).

4. A method as claimed in claim 1 wherein said air flow speed is at least 50% greater than the surface speed of the rollers (14).

5. A method as claimed in any of claims 1 to 4 wherein the rollers (14) rotate in a direction opposite to the direction of movement of the web (12).

6. A method as claimed in claim 5 wherein the inlet of the slot (24) is arranged on the upstream side of the roller (14) with respect to the direction of movement of the web (12).

7. A method as claimed in claim 5 or 6 wherein the differential between the surface speed of each roller (14) and the speed of the web (12) is from 5ms$^{-1}$ to 30ms$^{-1}$.

8. A method as claimed in claim 5 or 6 wherein the differential between the surface speed of each roller (14) and the speed of the web (12) is from 6ms$^{-1}$ to 12ms$^{-1}$.

9. A method as claimed in claim 5 or 6 wherein the differential between the surface speed of each roller (14) and the speed of the web (12) is 10ms$^{-1}$.

10. A method as claimed in any of claims 1 to 9 wherein the rotational speed of the rollers (14) is from 50 to 100 revs$^{-1}$.

**Patentansprüche**

1. Verfahren zum Reinigen einer sich bewegenden Bahn (12), das Folgendes beinhaltet:

   Bereitstellen einer Vorrichtung (10), die Folgendes umfasst:

   ein Paar rotierende Reinigungswalzen (14), die auf gegenüberliegenden Seiten der Bahn (12) angeordnet sind;
   ein Gehäuse (20), das einen Hauptteil der Oberfläche jeder Walze (14) umgibt;
   eine Vakuumkammer (22), die im Wesentlichen koextensiv mit jeder Walze (14) verläuft und mit einer Unterdruckquelle verbunden ist;
   einen Längsschlitz (24), der parallel zu jeder Walze (14) und im Wesentlichen koextensiv damit verläuft, wobei der Schlitz (24) einen Einlass nahe der Oberfläche der Walze (14) und einen Auslass in Verbindung mit der Vakuumkammer (22) hat und operativ einen Luftströmungsweg von einem Ort neben der Walze (14) in die Vakuumkammer (22) bereitstellt,

**dadurch gekennzeichnet, dass** das Verfahren das Betreiben der Walzen (14) und der Vakuumquelle (22) beinhaltet, so dass die Luftströmungsgeschwindigkeit von in jeden Einlass eintretender Luft nicht geringer ist als die Oberflächengeschwindigkeit der Walzen (14).

2. Verfahren nach Anspruch 1, wobei die genannte Luftströmungsgeschwindigkeit um wenigstens 1 % höher ist als die Oberflächengeschwindigkeit der Walzen (14).

3. Verfahren nach Anspruch 1, wobei die genannte Luftströmungsgeschwindigkeit um wenigstens 10 % höher ist als die Oberflächengeschwindigkeit der Walzen (14).

4. Verfahren nach Anspruch 1, wobei die genannte Luftströmungsgeschwindigkeit um wenigstens 50 % höher ist als die Oberflächengeschwindigkeit der Walzen (14).

5. Verfahren nach einem der Ansprüche 1 bis 4, wobei die Walzen (14) in einer Richtung entgegengesetzt zur Bewegungsrichtung der Bahn (12) rotieren.

6. Verfahren nach Anspruch 5, wobei sich der Einlass des Schlitzes (24) auf der stromaufwärtigen Seite der Walze (14) mit Bezug auf die Bewegungsrichtung der Bahn (12) befindet.

7. Verfahren nach Anspruch 5 oder 6, wobei die Differenz zwischen der Oberflächengeschwindigkeit jeder Walze (14) und der Geschwindigkeit der Bahn (12) von 5 ms$^{-1}$ bis 30 ms$^{-1}$ beträgt.

8. Verfahren nach Anspruch 5 oder 6, wobei die Differenz zwischen der Oberflächengeschwindigkeit jeder Walze (14) und der Geschwindigkeit der Bahn (12) von 6 ms$^{-1}$ bis 12 ms$^{-1}$ beträgt.

9. Verfahren nach Anspruch 5 oder 6, wobei die Differenz zwischen der Oberflächengeschwindigkeit jeder Walze (14) und der Geschwindigkeit der Bahn (12) 10 ms$^{-1}$ beträgt.

10. Verfahren nach einem der Ansprüche 1 bis 9, wobei die Rotationsgeschwindigkeit der Walze (14) von 50 bis 100 U/min$^{-1}$ beträgt.

**Revendications**

1. Procédé de nettoyage d'une bande continue en mouvement (12) comprenant l'opération consistant à :

mettre à disposition un appareil (10) comportant

la bande continue (12) ;

un logement (20) lequel entoure une majeure partie de la surface de chaque rouleau (14) ;

une chambre à dépression (22) laquelle se prolonge sensiblement dans le même plan que chaque rouleau (14) et est raccordée à une source à dépression ;

une fente longitudinale (24) qui se prolonge parallèlement à chaque rouleau (14) et s'étend sensiblement dans le même plan que celui-ci, la fente (24) possédant un orifice d'entrée à proximité de la surface du rouleau (14) et un orifice de sortie qui est en communication avec la chambre à dépression (22) et procurant de façon opératoire un trajet de flux d'air à partir d'une position adjacente au rouleau (14) jusqu'à la chambre à dépression (22),

**caractérisé en ce que** le procédé comprend l'opération consistant à faire fonctionner les rouleaux (14) et la source à dépression (22) de sorte que la vitesse du flux d'air pour l'air pénétrant dans chaque orifice d'entrée ne soit pas inférieure à la vitesse superficielle des rouleaux (14).

2. Procédé selon la revendication 1, ladite vitesse du flux d'air étant au moins supérieure de 1 % à la vitesse superficielle des rouleaux (14).

3. Procédé selon la revendication 1, ladite vitesse du flux d'air étant au moins supérieure de 10 % à la vitesse superficielle des rouleaux (14).

4. Procédé selon la revendication 1, ladite vitesse du flux d'air étant au moins supérieure de 50 % à la vitesse superficielle des rouleaux (14).

5. Procédé selon l'une quelconque des revendications 1 à 4, les rouleaux (14) tournant dans un sens qui est opposé au sens du mouvement de la bande continue (12).

6. Procédé selon la revendication 5, l'orifice d'entrée de la fente (24) étant agencé sur le côté amont du rouleau (14) par rapport au sens du mouvement de la bande continue (12).

7. Procédé selon la revendication 5 ou 6, le différentiel entre la vitesse superficielle de chaque rouleau (14) et la vitesse de la bande continue (12) allant de 5 ms$^{-1}$ à 30 ms$^{-1}$.

8. Procédé selon la revendication 5 ou 6, le différentiel entre la vitesse superficielle de chaque rouleau (14) et la vitesse de la bande continue (12) allant de 6 ms$^{-1}$ à 12 ms$^{-1}$.

**9.** Procédé selon la revendication 5 ou 6, le différentiel entre la vitesse superficielle de chaque rouleau (14) et la vitesse de la bande continue (12) étant de $10^{-1}$.

**10.** Procédé selon l'une quelconque des revendications 1 à 9, la vitesse de rotation des rouleaux (14) étant de 50 à 100 tours$^{-1}$.

FIG. 1

FIG. 2

FIG. 3A

FIG. 3B

FIG. 4

FIG. 5

FIG. 6

FIG. 7

EP 1 802 404 B1

14

FIG. 8

FIG. 9

EP 1 802 404 B1

FIG. 10

17

**EP 1 802 404 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6598261 B